# EUROPÄISCHE PATENTANMELDUNG

(11) **EP 4 768 768 A1**
(43) Veröffentlichungstag der Anmeldung: **01.07.2026**
(21) Anmeldenummer: 24223577.8
(22) Anmeldetag: 28.12.2024
(51) Int. Cl.: F16K 31/60, F16K 35/02, F16K 35/10, F16K 41/10

(54) **SICHERHEITS-VENTILVERSCHLUSS UND SICHERHEITSVENTIL**

(71) Anmelder: smolsys AG, 6039 Root D4 (CH)
(72) Erfinder: BURKHALTER, Patrick, 3412 Heimiswil (CH)
(74) Vertreter: Zwick, Evelyn

(57) **Zusammenfassung**

Die Erfindung betrifft ein Sicherheits-Ventilverschluss (1) zum Einstellen von Ventilen (40, 40'), umfassend eine innere Hülse (10) und eine äussere Hülse (20), die konzentrisch ineinander angeordnet sind, wobei die beiden Hülsen (10, 20) axial in einer definierten Hubhöhe (5) beweglich zueinander angeordnet sind und durch Drücken oder Ziehen der äusseren Hülse (20) zur inneren Hülse (10) von einer gezogenen Stellung in eine gedrückte Stellung gebracht werden können und umgekehrt, wobei die innere Hülse (10) einen Ventilraum (11) umschliesst, zum Aufschrauben auf ein Ventil (40, 40'), und die äussere Hülse (20) einen Handgriff (21) aufweist zum Einstellen eines Ventils (40, 40') im Gebrauch, und wobei beide Hülsen (10, 20) eine ineinander eingreifbare Verzahnung mit Zähnen (6) und Aussparungen (7) aufweisen, welche derart axial begrenzt angeordnet sind, dass sie nur in der gedrückten Stellung ineinander eingreifen, wodurch die Hülsen (10, 20) drehgekoppelt sind und wobei in der gezogenen Stellung die äussere Hülse (20) von der inneren Hülse (10) entkoppelt ist und in freier Rotation gedreht werden kann, wobei die äussere Hülse (20) in gezogener Stellung mindestens in der Hubhöhe (5) über das obere Ende der inneren Hülse (10) hinausragt und axial unmittelbar oberhalb des oberen Endes der inneren Hülse (10) eine radiale Bohrung (23) aufweist, in welche zur Sicherung der Ventilstellung ein Bolzen oder Bügel eines Schlosses durchgeführt werden kann, der ein Drücken der Hülsen zueinander mechanisch verhindert, sodass keine Ventilverstellung erfolgen kann. Die Erfindung betrifft auch ein Sicherheits-Ventilverschluss (1) mit einem Ventil (40, 40') sowie ein Sicherheitsventil (40') mit einem zusätzlichen Dichtungssystem (51).

## Beschreibung

Die Erfindung betrifft einen Sicherheits-Ventilverschluss zum Einstellen, Verschliessen und Öffnen von Ventilen, insbesondere von Hochvakuumventilen, sowie ein Sicherheits-Ventilverschluss mit einem Ventil. Die Erfindung betrifft auch ein Sicherheitsventil.

### Stand der Technik

Ventile sind konventionelle Bauteile und werden zum Regeln und Absperren von Durchflüssen von Fluiden wie Gasen und Flüssigkeiten verwendet. Von Interesse sind hier Ventile, die von Hand an Ventilverschlüssen mit Handgriffen betätigt werden, wobei die Handgriffe auch als Hebel oder Handräder ausgestaltet sein können. In der Regel sind sie an den Ventilen austauschbar angebracht. An ihnen kann die Durchflussstärke reguliert und/oder eine Leitung verschlossen werden.

Bei Anwendungen im Sicherheitsbereich kann es wichtig sein, dass die Ventilverschlüsse nicht von Unberechtigten verstellt werden können. Typische Anwendungen dafür finden sich bei Durchfluss von radioaktiven Gasen oder biologischen oder chemischen Gefahrenstoffen. Eine Freigabe solcher Medien in die Umwelt könnte gefährliche Folgen für Mensch und Umwelt bedeuten.

Um den unberechtigten Zugang zu verhindern, kann beispielsweise ein kübelförmiger Behälter über das gesamte Ventil mit Ventilverschluss gestülpt und mit einem Schloss verschlossen werden, damit der Zugang versperrt ist. Nur wer den Schlüssel zum Schloss hat, kann eine Ventilverstellung vornehmen.

Andere Sicherheiten können auch dadurch erreicht werden, indem ein Handrad mit einer Kette fixiert wird, die durch das Handrad läuft. Dadurch kann die Einstellung nur noch in einem kleinen Winkelbereich geändert werden. Stellt das Ventil aber ein Vakuum oder ein Hochvakuum sicher, so reicht eine sehr kleine Drehung am Handrad, um das Vakuums zu vernichten.

### Darstellung der Erfindung

Es ist die Aufgabe der vorliegenden Erfindung, einen eingangs beschriebenen Sicherheits-Ventilverschluss zu beschreiben, der eine Ventilverstellung durch Unberechtigte verhindert. Sabotage durch böswillige Manipulation sowie Unfälle in Folge einer unbeabsichtigten Änderung der Ventileinstellung sollen dadurch möglichst verhindert werden. Der Verschluss soll lösbar mit einem Ventil verbindbar sein für Wartung und Austausch.

Es ist eine weitere Aufgabe der Erfindung, die Bedienung nach der Entriegelung einfach und sicher bewerkstelligen zu können, oder alternativ die Sicherheit zur Vermeidung einer unbeabsichtigten Ventilverstellung auch für Berechtigte zu steigern.

Eine weitere Erfindung betrifft die Beschreibung eines Sicherheits-Ventilverschlusses mit Ventil sowie weitere Ausführungen, mit zusätzlichen Sicherheiten. Auch ein Ventil soll beschrieben werden, das zusätzliche Sicherheiten aufweist, um es mit erhöhter Sicherheit im Zusammenhang mit Gefahrenstoffen verwenden zu können.

Die Erfindung wird gelöst durch die Merkmale der jeweiligen Patentansprüche ihrer Kategorien sowie durch die davon anhängigen Ansprüche.

Der eingangs erwähnte Sicherheits-Ventilverschluss umfasst eine innere Hülse und eine äussere Hülse, die konzentrisch ineinander angeordnet sind und durch eine Verliersicherung aneinander gekoppelt sind, mit jeweils axialen oberen und unteren Enden. Die beiden Hülsen sind axial in einer definierten Hubhöhe beweglich zueinander angeordnet und können durch Drücken oder Ziehen der äusseren Hülse zur inneren Hülse von einer gezogenen Stellung in eine gedrückte Stellung gebracht werden und umgekehrt.

Die innere Hülse umschliesst einen Ventilraum, der am oberen Ende mit einem Deckel begrenzt ist, an dessen Innenseite mittig eine Punktauflage angeordnet ist zum Abstützen eines Ventils. Zudem weist sie ein Innengewinde am unteren Ende der Hülse auf, zum Aufschrauben auf ein Ventil, sodass ein darin eingeschraubtes Ventil beim vollständigen Aufschrauben der inneren Hülse geschlossen werden kann. Durch eine Drehung in die Gegenrichtung wird das darin eingesetzte Ventil entsprechend wieder geöffnet.

Die äussere Hülse weist einen Handgriff auf zum Einstellen, Verschliessen und Öffnen eines Ventils im Gebrauch. Vorzugsweise umfasst sie auch eine Abdeckung an ihrem oberen Ende.

Beide Hülsen weisen eine ineinander eingreifbare Verzahnung mit Zähnen und Aussparungen auf, welche derart axial begrenzt angeordnet sind, dass sie nur in der gedrückten Stellung ineinander eingreifen. In dieser gedrückten Stellung sind die Hülsen drehgekoppelt, sodass durch Drehen des Handgriffs an der äusseren Hülse die innere Hülse zwangsläufig mitgedreht und ein eingesetztes Ventil verstellt wird.

In der gezogenen Stellung ist die äussere Hülse von der inneren Hülse entkoppelt und kann in freier Rotation gedreht werden, ohne die innere Hülse zu drehen, sodass im Gebrauch nur in gedrückter Stellung eine Änderung der Ventilstellung mit dem Hanfgriff möglich ist.

Erfindungsgemäss ragt die äussere Hülse in gezogener Stellung mindestens in der Hubhöhe über das obere Ende der inneren Hülse hinaus und weist axial unmittelbar oberhalb des oberen Endes der inneren Hülse eine durchgehende oder halbseitige radiale Bohrung auf. In diese Bohrung kann zur Sicherung der Ventilstellung ein Bolzen oder Bügel eines Schlosses durchgeführt oder eingeführt werden, der, wenn er eingesetzt resp. ausgefahren ist, ein Drücken der Hülsen zueinander mechanisch verhindert, weil sich der Bolzen oder Bügel über der inneren Hülse befindet. Infolgedessen hat ein Drehen des Handgriffs nur eine freie Rotation der äusseren Hülse zur Folge. In diesem Zustand kann keine Ventilverstellung erfolgen.

Bei einer durchgehenden Bohrung kann beispielsweise ein Bügel eines Vorhängeschlosses eingesetzt werden. Bei einer einseitigen Bohrung kann ein Bolzenschloss mit einem ausfahrbaren Bolzen eingesetzt werden, wie sie von Schiebetür- oder Fensterschlössern bekannt sind. Für diese Ausführung kann die einseitige Bohrung durch den Griff führen, um mehr Baulänge für das Bolzenschloss nutzen zu können. Der Sicherheits-Ventilverschluss kann ein geeignetes Schloss, insbesondere ein Bolzenschloss umfassen.

Da der erfindungsgemässe Sicherheits-Ventilverschluss bequem mit einem Schloss versehen werden kann oder versehen ist, kann eine Sabotage oder eine versehentliche Verstellung eines Unberechtigten durch Abschliessen verhindert werden. Nach dem Öffnen des Schlosses und Entfernen des Bolzens über der inneren Hülse können die beiden Hülsen durch Drücken am Handgriff drehfest gekoppelt werden, wodurch eine Verstellung der Ventileinstellung ermöglicht wird.

Insbesondere betrifft die Erfindung auch einen Sicherheits-Ventilverschluss mit einem darin eingeschraubten Ventil, das mit dem Sicherheits-Ventilverschluss bedient werden kann.

Die Erfindung betrifft auch ein Sicherheitsventil, das zusammen mit dem beschriebenen Sicherheits-Ventilverschluss verwendet werden kann oder in einem solchen eingebaut ist. Es umfasst ein Ventilgehäuse und einen dieses koaxial durchquerenden und dazu axial beweglich gelagerten Ventilstamm, wobei dazwischen eine Faltenbalgdichtung angeordnet ist. Diese ist unten am Ventilgehäuse sowie oben am Ventilstamm angeschweisst oder umgekehrt. Erfindungsgemäss ist ein zusätzliches Dichtungssystem zwischen dem Ventilstamm und dem Ventilgehäuse angeordnet, welches mindestens einen ersten O-Ring zwischen dem Ventilstamm und dem Ventilgehäuse umfasst. Dadurch bietet bei einem Versagen der Faltenbalgdichtung das zusätzliche Dichtungssystem im Gebrauch zusätzlichen Schutz.

Weitere vorteilhafte Ausführungen werden in den abhängigen Ansprüchen beschrieben. Im Zusammenhang mit den Figuren wird die Erfindung genauer beschrieben.

### Kurze Beschreibung der Zeichnungen

Im Folgenden wird die Erfindung in verschiedenen Zeichnungen dargestellt und mit Hilfe der später erläuterten Bezugszeichen näher erklärt. Es zeigen:
- Fig. 1: eine Darstellung im Schnitt eines erfindungsgemässen Sicherheits-Ventilverschlusses in einer ersten Variante; 1a: in gezogener Stellung und 1b: in gedrückter Stellung; 1c: in Schnittdarstellung gemäss Fig. 1a; 1d: in perspektivischer Darstellung gemäss Fig. 1a; wobei Fig. 1c = Fig. 2c = Fig. 3c;
- Fig. 2: eine Darstellung im Schnitt eines erfindungsgemässen Sicherheits-Ventilverschlusses in einer zweiten Variante; 2a: in gezogener Stellung und 2b: in gedrückter Stellung; 2c: in Schnittdarstellung gemäss Fig. 2a; 2d: in perspektivischer Darstellung von Fig. 2b
- Fig. 3: eine Darstellung im Schnitt eines erfindungsgemässen Sicherheits-Ventilverschlusses in einer dritten Variante; 3a: in gezogener Stellung und 3b: in gedrückter Stellung; 3c: in Schnittdarstellung gemäss Fig. 3a;
- Fig. 4: eine perspektivische Seitenansicht eines kompletten Ventils mit Sicherheits-Ventilverschluss und einem darin angebrachten Bolzenschloss;
- Fig. 5: eine Schnittdarstellung eines kompletten Sicherheitsventils, mit erfindungsgemässem Sicherheits-Ventilverschluss, 5a: quer zur Leitung und zum Handgriff; 5b: in der Ebene der Leitung und des Handgriffs;
- Fig. 6: schematische Schnittdarstellung der wichtigsten Komponenten eines erfindungsgemässen Sicherheitsventils; 6a: in einfacher Ausführung, 6b: in bevorzugter Ausführung.

### Wege zur Ausführung der Erfindung

In allen Figuren wird mit den Bezeichnungen «oben» 2 und «unten» 3 Bezug auf die hier dargestellte Ausrichtung genommen.

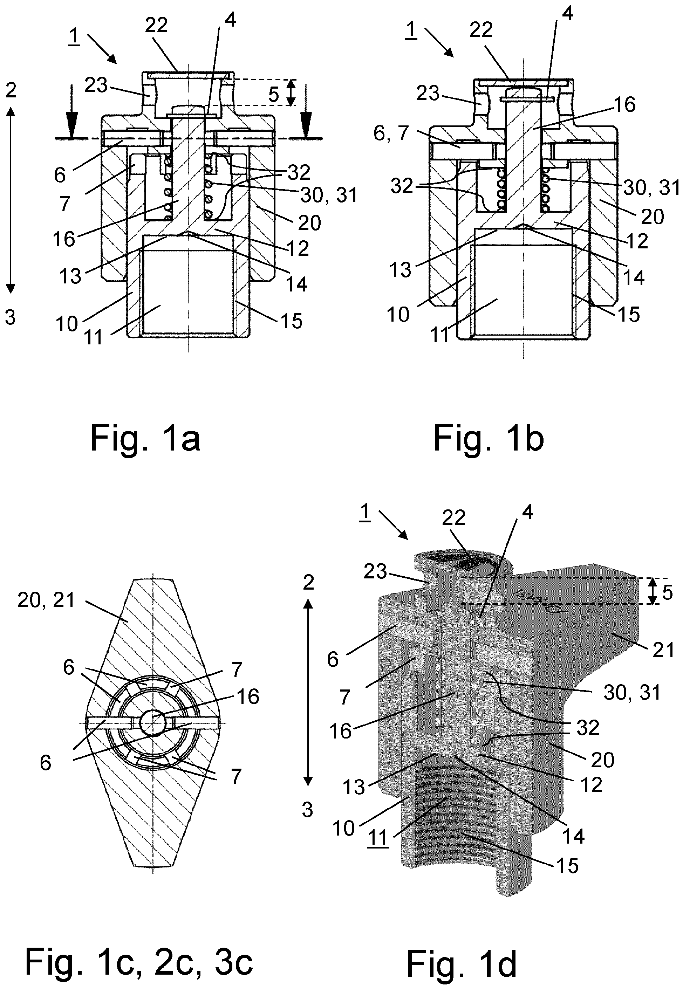

In den Figuren 1 bis 3 sind verschiedene Varianten eines erfindungsgemässen Sicherheits-Ventilverschlusses 1 dargestellt. Sie alle eignen sich zum Einstellen, Verschliessen und Öffnen von Ventilen 40, 40', insbesondere von Hochvakuumventilen.

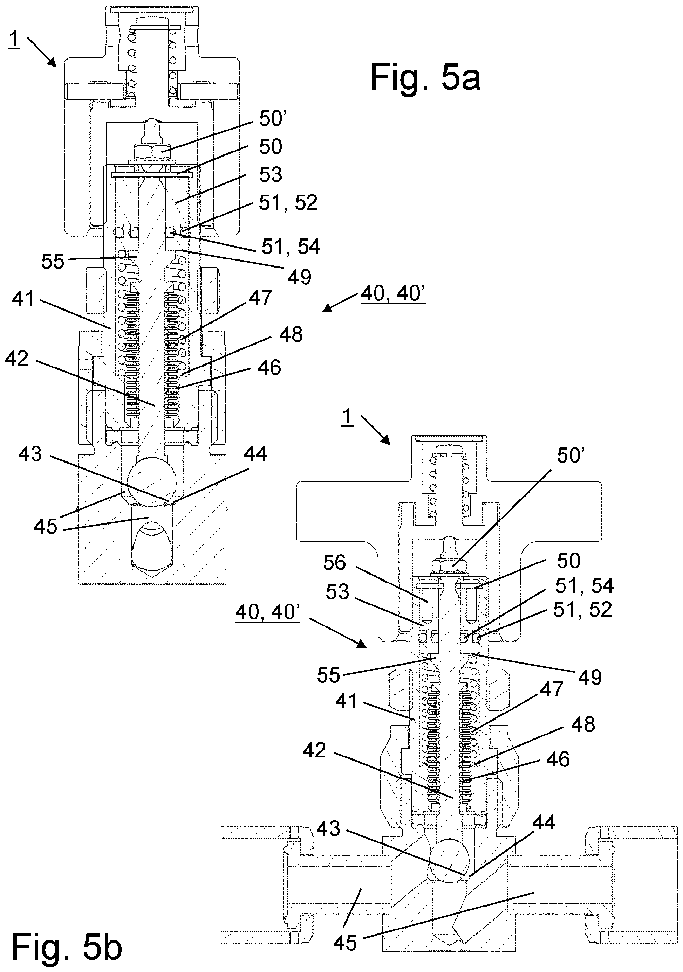

In den beiden Figuren 5a und 5b ist ein Sicherheits-Ventilverschluss 1 nach Fig. 1 auf einem Ventil 40, 40' an einem Ventilgehäuse 41 mit einem daraus herausragenden Ventilstamm 42 aufgeschraubt, sodass der Ventilstamm 42 am Sicherheits-Ventilverschluss 1 ansteht. Beim weiteren Eindrehen des Sicherheits-Ventilverschlusses 1 auf das Ventilgehäuse 41 wird der Ventilstamm 42, der federbelastet im Ventilgehäuse 41 gelagert ist, nach unten gedrückt, wodurch eine Dichtfläche 43 am unteren Ende des Ventilstamms 42 einen Durchflussquerschnitt einer Durchflussleitung 45 verringert und schliesslich auf einem Sitz 44 angepresst wird, um einen Durchfluss zu verhindern. Das Ventil 40, 40' ist dann geschlossen. Beim Drehen des Sicherheits-Ventilverschlusses 1 in Gegenrichtung wird der federbelastete Ventilstamm 42 wieder angehoben und das Ventil 40, 40' dadurch geöffnet.

In der Folge werden die Sicherheits-Ventilverschlüsse 1 nach Figuren 1-3 genauer beschrieben.

Jeder Sicherheits-Ventilverschluss 1 umfasst eine innere Hülse 10 und eine äussere Hülse 20, die konzentrisch ineinander angeordnet sind und durch eine Verliersicherung 4, beispielsweise ein Sprengring, aneinander gekoppelt sind, mit jeweils axialen oberen Enden 2 und unteren Enden 3. Die beiden Hülsen 10, 20 sind axial in einer definierten Hubhöhe 5 beweglich zueinander angeordnet und können durch Drücken oder Ziehen der äusseren Hülse 20 zur inneren Hülse 10 von einer gezogenen Stellung nach Fig. 1a, 2a, 3a in eine gedrückte Stellung nach Fig. 1b, 2b, 3b gebracht werden und umgekehrt.

Die innere Hülse 10 umschliesst einen Ventilraum 11, der am oberen Ende mit einem Deckel 12 begrenzt ist, an dessen Innenseite 13 mittig eine Punktauflage 14 angeordnet ist zum Abstützen eines Ventils 40, 40'. Die innere Hülse 10 umfasst zudem ein Innengewinde 15 am unteren Ende, zum Aufschrauben auf Ventil 40, 40', sodass ein darin eingeschraubtes Ventil 40, 40' beim vollständigen Aufschrauben der inneren Hülse 10 geschlossen werden kann. Der Deckel 12 kann sich nach oben zudem zu einem Führungsbolzen 16 erstrecken, wodurch das obere Ende der inneren Hülse 10 entsprechend erhöht wird.

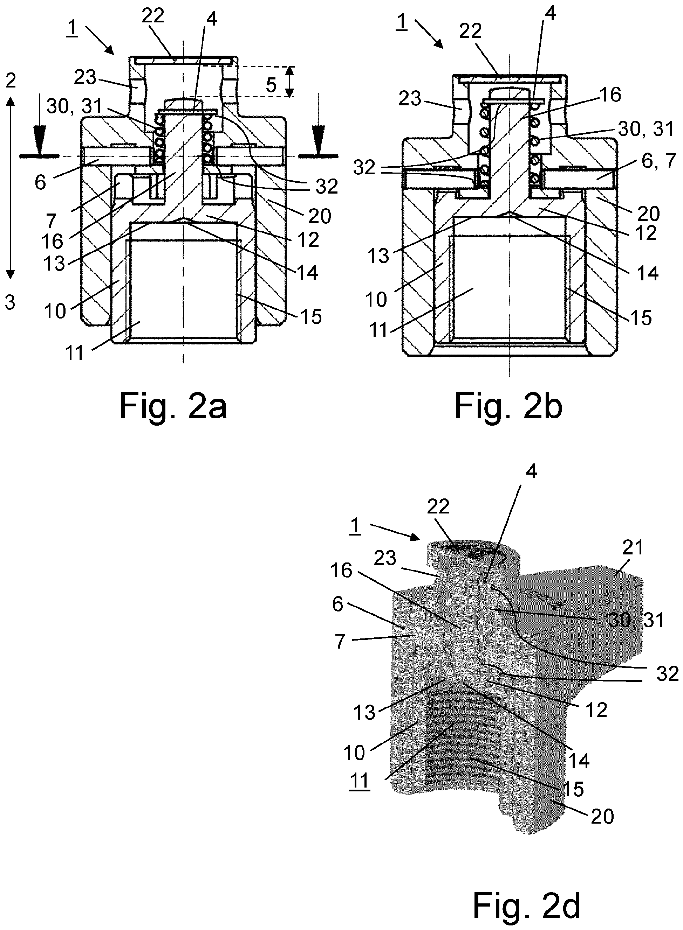

Die äussere Hülse 20 weist einen Handgriff 21 auf, siehe Fig. 1c, 1d, 2d, zum Einstellen, Verschliessen und Öffnen eines Ventils 40, 40' im Gebrauch, sowie vorzugsweise eine Abdeckung 22 an ihrem oberen Ende.

Beide Hülsen 10, 20 weisen eine ineinander eingreifbare Verzahnung mit Zähnen 6 und Aussparungen 7 auf, welche derart axial begrenzt angeordnet sind, dass sie nur in der gedrückten Stellung ineinander eingreifen. In der gedrückten Stellung sind die Hülsen 10, 20 folglich drehgekoppelt. Durch Drehen des Handgriffs 21 an der äusseren Hülse 20 wird die innere Hülse 10 zwangsläufig mitgedreht und ein eingesetztes Ventil 40, 40' verstellt. Die Verzahnung wird später genauer erläutert.

In der gezogenen Stellung kann die äussere Hülse 20 von der inneren Hülse 10 entkoppelt in freier Rotation gedreht werden, ohne die innere Hülse 10 zu drehen. Im Gebrauch ist daher nur in gedrückter Stellung eine Änderung der Ventilstellung mit dem Hanfgriff 21 möglich.

Die äussere Hülse 20 ragt in gezogener Stellung mindestens in der Hubhöhe 5 über das obere Ende der inneren Hülse 10 hinaus und weist axial unmittelbar oberhalb des oberen Endes der inneren Hülse 10 eine durchgehende oder halbseitige radiale Bohrung 23 auf, in welche zur Sicherung der Ventilstellung ein Bolzen oder Bügel eines Schlosses (nicht dargestellt) durchgeführt oder eingeführt werden kann. Sobald ein Bolzen oder Bügel (nicht dargestellt) eingesetzt ist, verhindert er ein Drücken der Hülsen zueinander auf mechanische Art, weil er sich auf dem oberen Ende 2 der inneren Hülse 10 abstützt. Ein Drehen des Handgriffs 21 hat somit nur eine freie Rotation der äusseren Hülse 10 zur Folge, sodass keine Ventilverstellung erfolgen kann.

Die Hubhöhe 5 ist vorzugsweise mindestens so breit wie der Durchmesser der Bohrung 23 und ein Sicherheitsrand in der Grössenordnung eines halben Durchmessers davon, um einen Durchbruch der Bohrung 23 zu verhindern.

Bei einer durchgehenden Bohrung 23, wie in den Figuren 1-3 und 5 gezeigt, kann beispielsweise ein Bügel eines Vorhängeschlosses eingesetzt werden.

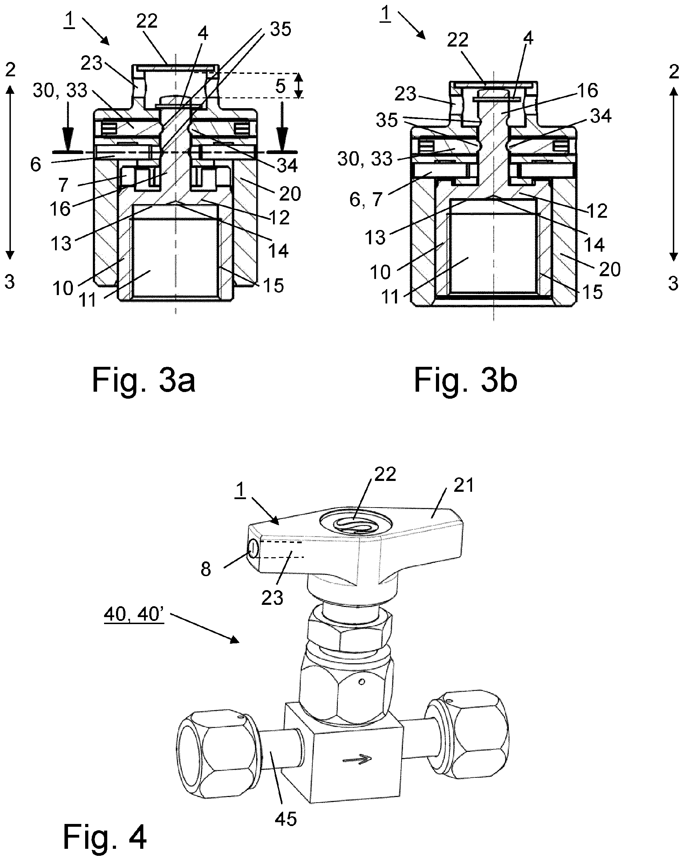

Fig. 4 zeigt ein Beispiel einer Ansicht eines erfindungsgemässen Sicherheits-Ventilverschlusses 1 auf einem Ventil 40, 40', bei dem der Handgriff 21 bis zum oberen Ende der äusseren Hülse 20 reicht. Dieser Sicherheits-Ventilverschlusses 1 verfügt über eine einseitige radiale Bohrung 23, die durch den Handgriff 21 verläuft. In dieser Bohrung 23 ist ein Bolzenschloss 8 eingesetzt, wie solche von Schiebetür- oder Fensterschlössern bekannt sind. Für diese Ausführung kann die einseitige Bohrung 23 durch den Handgriff 21 geführt führen, um mehr Baulänge für das Bolzenschloss 8 nutzen zu können. Der Sicherheits-Ventilverschluss 1 kann ein geeignetes Schloss, insbesondere ein Bolzenschloss 8 enthalten.

In den Figuren 1c, 2c, 3c, sowie 1d und 2d ist die ineinander eingreifbare Verzahnung mit Zähnen 6 und Aussparungen 7 ersichtlich. Jedem Zahn 6 einer Hülse10, 20 liegt eine Aussparung 7 in der anderen Hülse 20, 10 gegenüber, bei geeigneter Drehposition zueinander. Beim Zusammenschieben wird mindestens ein Zahn 6 einer Hülse 10, 20 in Umfangsrichtung beidseitig von Zähnen 6 der anderen Hülse 20, 10 umgeben, wodurch eine Drehkopplung entsteht. In den hier gezeigten Ausführungen sind in der äusseren Hülse 20 zwei Stifte als Zähne 6 radial in Richtung der Achse getrieben. In der inneren Hülse 10 weist der Rand in dieser Ausführung sechs gleichmässig voneinander beabstandete, im Wesentlichen gebogene rechteckige Zähne 6 auf dem Umfang auf, deren sechs Zwischenräume die Aussparungen 7 bilden, in welche die Stifte als Zähne 6 eingefügt werden können. Demnach kann jeweils im Abstand von 60° eine Verzahnung vorgenommen werden, indem die Stifte als Zähne 6 in zwei sich gegenüber liegenden Aussparungen 7 eingefügt werden. In dieser Ausführung besteht somit die Verzahnung in der äusseren Hülse 20 aus zwei Zähnen 6, ausgestaltet als zwei Stifte, und zwei grossen Aussparungen, die den restlichen Umfang ausmachen. Es gibt viele andere Varianten von Verzahnungen.

Durch Ziehen und Drücken des Handgriffs 21 lässt sich einfach von der gedrückten, gekoppelten Stellung in die gezogene, ungekoppelte Stellung des Sicherheits-Ventilverschlusses hin und her wechseln.

Im Sicherheits-Ventilverschluss 1 nach den Figuren 1-3 ist vorzugsweise eine Sicherung 30 vorgesehen, mit welcher sich mindestens eine der Stellungen, vorzugsweise beide Stellungen, sichern lassen. In der Folge werden drei Varianten dieser Sicherung 30 beschrieben.

Die ersten beiden Varianten dieser Sicherung sind in den Figuren 1 und 2 dargestellt. Zwischen den Hülsen 10, 20 ist die Sicherung 30 als eine axial belastbare Verschlussfeder 31 mit einem oberen und einem unteren Ende angeordnet, wobei sich jedes der Enden an einem Absatz 32 einer anderen Hülse 20, 10 abstützt. Dadurch ist die Verschlussfeder 31 in einer der Stellungen gespannt, in der anderen entspannt.

In der Variante nach Fig. 1 ist die Verschlussfeder 31 in der gezogenen Stellung gemäss Fig. 1a und 1d entspannt, sodass der Sicherheits-Ventilverschluss 1 in dieser entkoppelten Stellung verbleibt, solange nicht auf den Handgriff 21 gedrückt wird. Somit kann ein eingebautes Ventil 40, 40' nicht versehentlich verstellt werden. Diese sichere Version ist insbesondere dann gewünscht, wenn ein unbeabsichtigtes Verstellen des Ventils 40, 40' ein Risiko für Mensch oder Umwelt oder für einen laufenden Prozess besteht, der mit dem Ventil 40, 40' geregelt wird.

In der Variante nach Fig. 2 ist die Verschlussfeder 31 in der gedrückten Stellung nach Fig. 2b und 2d entspannt, sodass der Sicherheits-Ventilverschluss 1 in dieser drehgekoppelten Stellung verbleibt, solange nicht am Handgriff 21 gezogen wird. In dieser Version kann ein eingebautes Ventil 40, 40' stets verstellt werden. Der Benutzer kann jederzeit auf die Verstellung zugreifen uns muss nicht erst auf den Handgriff 21 drücken. Der Komfort ist gross, doch es gibt keine zusätzliche Sicherheit, nachdem das Schloss entfernt oder das Bolzenschloss 8 geöffnet wurde.

In einer Variante nach Fig. 3 ist die Sicherung 30 als mindestens ein Gewindestift 33 ausgestaltet, der radial in die äussere Hülse 20 eingebracht ist und an der inneren Hülse 10 in einer von vorzugsweise zwei passend angebrachten umlaufenden Nuten 35 eingreift. In Fig. 3 sind zwei solche Gewindestifte 33 dargestellt. Die Nuten 35 sind so angebracht, dass der Gewindestift 33 in jeder der Stellungen in eine Nut 35 eingreifen kann, um die jeweilige Stellung nach Fig. 3a resp. 3b zu fixieren.

Selbst wenn das Schloss entfernt oder das Bolzenschloss 8 geöffnet ist, braucht der Benutzer somit noch ein Werkzeug, um die gekoppelte, gedrückte Stellung zu erreichen. Alternativ ist der Gewindestift 33 mit einer gefederten Druckkugel 34 ausgestattet, um eine Änderung und Einrastung in die eine oder beide Nuten 35 ohne Gebrauch von Werkzeug zu erreichen. Dadurch kann einfach zwischen den beiden Stellungen gewechselt werden. Sobald die Einstellung ein eingebautes Ventils 40, 40' abgeschlossen ist, kann in die gezogene Stellung gewechselt werden. Dies bietet eine provisorische Sicherheit, bis das Schloss wieder eingefügt resp. das Bolzenschloss 8 ausgefahren wird.

Die Sicherung 30 in den verschiedenen Varianten kann entweder im Bereich radial ausserhalb des Ventilraums 11 angeordnet sein, nicht dargestellt, oder radial ausserhalb eines Führungsbolzens 16, der auf dem Deckel der inneren Hülse nach oben ragt, wie hier jeweils gezeigt.

Als Verliersicherung 4 kann ein Sprengring eingesetzt werden, wie hier jeweils dargestellt. Alternative Ausführungen gibt es viele, zum Beispiel eine Mutter.

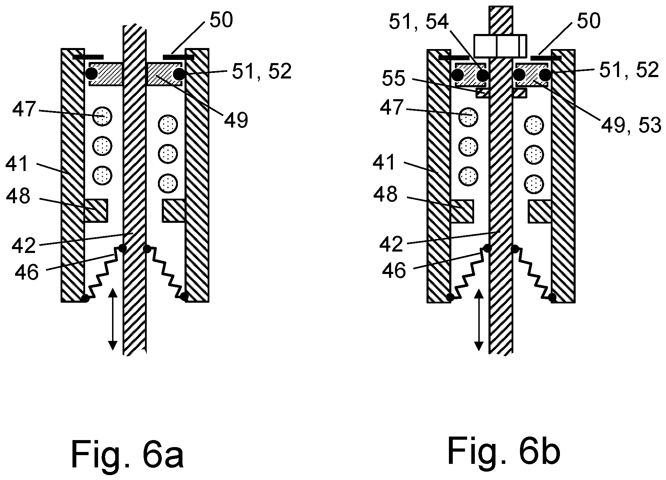

Als Ventil 40, 40' kann ein herkömmliches Ventil 40 verwendet werden. Falls es die Anwendung erfordert, kann, um die Sicherheit zu erhöhen, im Sicherheits-Ventilverschluss 1 ein erfindungsgemässes Sicherheitsventil 40' eingesetzt werden, wie es in den Figuren 5a und 5b sowie schematisch in den Figuren 6a und 6b dargestellt ist. Es umfasst ein Ventilgehäuse 41 und einen dieses koaxial durchquerenden und dazu axial beweglich gelagerten Ventilstamm 42, wobei dazwischen eine Faltenbalgdichtung 46 angeordnet und unten am Ventilgehäuse 41 sowie oben am Ventilstamm 42 angeschweisst ist oder umgekehrt. Zwischen dem Ventilstamm 42 und dem Ventilgehäuse 41 ist ein zusätzliches Dichtungssystem 51 angeordnet. Dieses umfasst mindestens einen ersten O-Ring 52 zwischen dem Ventilstamm 42 und dem Ventilgehäuse 41, sodass im Gebrauch bei einem Versagen der Faltenbalgdichtung 46 das zusätzliche Dichtungssystem 51 zusätzlichen Schutz bieten kann. Diese Version ist in Fig, 6a dargestellt.

Eine verbesserte Variante ist in Fig. 6b sowie auch in den Figuren 5 dargestellt. Bei diesem Sicherheitsventil 40' ist zwischen dem Ventilstamm 42 und dem Ventilgehäuse 41 ein zylindrischer Kolben 53 axial beweglich eingesetzt. Der erste O-Ring 52 des Dichtungssystems 51 ist zwischen dem Kolben 53 und dem Ventilgehäuse 41 eingesetzt. Das Dichtungssystem 51 umfasst hier einen zweiten O-Ring 54, der zwischen dem Ventilstamm 42 und dem Kolben 53 eingesetzt ist.

Für beide Varianten nach Fig. 6a und 6b wird bevorzugt, dass der Ventilstamm 42 durch eine Ventilfeder 47 federbelastet im Ventilgehäuse 41 gelagert ist. Die Ventilfeder 47 ist dabei nach unten an einem ersten Absatz 48 am Ventilgehäuse 41 und nach oben an einem zweiten Absatz 49 abgestützt, der seinerseits in seiner Bewegung nach oben an einer ersten, vorzugsweise entnehmbaren Arretierung 50, am Ventilgehäuse 41 begrenzt ist. Der zweite Absatz 49 ist entweder fest, gemäss Fig. 6a, mit dem Ventilstamm 42 verbunden, oder, gemäss Fig, 6b, als zylindrischer Kolben 53 beweglich um den Ventilstamm 42 gelagert und mit einer zweiten, vorzugsweise entnehmbaren Arretierung 50', am Ventilstamm 42 nach oben abgestützt.

Die Ausführung nach Fig. 6b hat den Vorteil, dass das Sicherheitsventil 40' für Wartungszwecke geöffnet werden kann. Nach dem Entfernen der zweiten Arretierung 50' am Ventilstamm 42, beispielsweise der Mutter, und der ersten Arretierung 50 am Ventilgehäuse 41, beispielsweise des Sprechrings, können der zylindrische Kolben 53 mit seinen beiden darin eingelagerten O-Ringen 52, 54 des Dichtungssystems 51 und die Ventilfeder 47 entnommen werden. Anschliessend können die entnommenen Teile geprüft und gereinigt oder ausgetauscht werden. Ein zusätzlicher Anschlag 55 am Ventilstamm bei der erneuten Montage gewährleistet, dass die zweite Arretierung 50', beispielsweise die Mutter, bis zu diesem Anschlag 55 festgezogen werden kann, um die vorgesehene Position des Kolbens 53 in der axialen Höhe zu erreichen. Zudem kann der Kolben 53 ein oder zwei Bohrlöcher 56 aufweisen, siehe Fig. 5b, um dort beim Herausziehen des Kolbens 53 aus dem Ventilgehäuse 41 eingreifen zu können.

Anstelle eines Sicherheitsventils 40' kann, wenn es die Anwendung erlaubt, ein herkömmliches Ventil 40 verwendet werden. Der Einsatz eines Sicherheitsventils 40' ist insbesondere dann von Vorteil, wenn damit der Durchfluss von Gefahrenstoffen reguliert oder blockiert werden soll.

Erfindungsgemäss kann in einem Sicherheits-Ventilverschluss 1 ein Ventil 40, 40' eingeschraubt sein, das mit dem Sicherheits-Ventilverschluss 1 bedient werden kann. Das eingesetzte Ventil 40, 40' kann insbesondere ein Gasventil sein, vorzugsweise ein Vakuumventil oder ein Hochvakuumventil. Ein solcher Sicherheits-Ventilverschluss 1 mit einem Ventil 40, 40' ist für die Verwendung im Hochsicherheitsbereich geeignet, selbst wenn die zu verwenden Fluide gefährliche Gefahrenstoffe enthalten wie beispielsweise biologische, chemische oder radioaktive Gefahrenstoffe.

### Bezugszeichenliste

- 1: Sicherheits-Ventilverschluss
- 2: Oberes Ende
- 3: Unteres Ende
- 4: Verliersicherung, Sprengring
- 5: Hubhöhe
- 6: Zahn
- 7: Aussparung
- 8: Bolzenschloss
- 10: Innere Hülse
- 11: Ventilraum
- 12: Deckel
- 13: Innenseite
- 14: Punktauflage
- 15: Innengewinde
- 16: Führungsbolzen
- 20: Äussere Hülse
- 21: Handgriff
- 22: Abdeckung
- 23: Radiale Bohrung, durchgehend oder einseitig
- 30: Sicherung
- 31: Verschlussfeder
- 32: Absatz
- 33: Gewindestift
- 34: gefederte Druckkugel
- 35: umlaufende Nut
- 40: Ventil; 40' Sicherheitsventil, Ventil
- 41: Ventilgehäuse
- 42: Ventilstamm
- 43: Dichtfläche am Ventilstamm
- 44: Sitz
- 45: Durchflussleitung
- 46: Faltenbalgdichtung
- 47: Ventilfeder
- 48: Erster Absatz am Ventilgehäuse
- 49: Zweiter Absatz
- 50: Erste Arretierung am Ventilgehäuse, Sprengring; 50': zweite Arretierung am Ventilstamm, Mutter
- 51: Dichtungssystem, zusätzlich
- 52: Erster O-Ring
- 53: Zylindrischer Kolben
- 54: Zweiter O-Ring
- 55: Anschlag
- 56: Bohrloch

## Patentansprüche

1. Sicherheits-Ventilverschluss (1) zum Einstellen, Verschliessen und Öffnen von Ventilen (40, 40'), insbesondere von Hochvakuumventilen, umfassend eine innere Hülse (10) und eine äussere Hülse (20), die konzentrisch ineinander angeordnet sind und durch eine Verliersicherung (4) aneinander gekoppelt sind, mit jeweils axialen oberen Eden (2) und unteren Enden (3), wobei die beiden Hülsen (10, 20) axial in einer definierten Hubhöhe (5) beweglich zueinander angeordnet sind und durch Drücken oder Ziehen der äusseren Hülse (20) zur inneren Hülse (10) von einer gezogenen Stellung in eine gedrückte Stellung gebracht werden können und umgekehrt, wobei die innere Hülse (10) einen Ventilraum (11) umschliesst, der am oberen Ende mit einem Deckel (12) begrenzt ist, an dessen Innenseite (13) mittig eine Punktauflage (14) angeordnet ist zum Abstützen eines Ventils (40, 40'), sowie ein Innengewinde (15) am unteren Ende der inneren Hülse (10), zum Aufschrauben auf ein Ventil (40, 40'), sodass ein darin eingeschraubtes Ventil (40, 40') beim vollständigen Aufschrauben der inneren Hülse (10) geschlossen werden kann, und wobei die äussere Hülse (20) einen Handgriff (21) aufweist zum Einstellen, Verschliessen und Öffnen eines Ventils (40, 40') im Gebrauch, sowie vorzugsweise eine Abdeckung (22) an ihrem oberen Ende, und wobei beide Hülsen (10, 20) eine ineinander eingreifbare Verzahnung mit Zähnen (6) und Aussparungen (7) aufweisen, welche derart axial begrenzt angeordnet sind, dass sie nur in der gedrückten Stellung ineinander eingreifen, wodurch in gedrückten Stellung die Hülsen (10, 20) drehgekoppelt sind und durch Drehen des Handgriffs (21) an der äusseren Hülse (20) die innere Hülse (10) zwangsläufig mitgedreht und im Gebrauch ein eingesetztes Ventil (40, 40') verstellt wird, und wobei in der gezogenen Stellung die äussere Hülse (20) von der inneren Hülse (10) entkoppelt ist und in freier Rotation gedreht werden kann, ohne die innere Hülse (10) zu drehen, sodass im Gebrauch nur in gedrückter Stellung eine Änderung der Ventilstellung mit dem Hanfgriff (21) möglich ist,
**dadurch gekennzeichnet, dass** die äussere Hülse (20) in gezogener Stellung mindestens in der Hubhöhe (5) über das obere Ende der inneren Hülse (10) hinausragt und axial unmittelbar oberhalb des oberen Endes der inneren Hülse (10) eine durchgehende oder halbseitige radiale Bohrung (23) aufweist, in welche zur Sicherung der Ventilstellung ein Bolzen oder Bügel eines Schlosses durchgeführt oder ausgefahren werden kann, der, wenn er sich über der inneren Hülse (10) befindet, ein Drücken der Hülsen zueinander mechanisch verhindert, sodass ein Drehen des Handgriffs (21) nur eine freie Rotation der äusseren Hülse zur Folge hat und keine Ventilverstellung erfolgen kann.

2. Sicherheits-Ventilverschluss nach Anspruch 1, **dadurch gekennzeichnet, dass** eine Sicherung (30) vorgesehen ist, mit welcher sich mindestens eine der Stellungen, vorzugsweise beide Stellungen sichern lassen.

3. Sicherheits-Ventilverschluss nach Anspruch 2, **dadurch gekennzeichnet, dass** als Sicherung (30) zwischen den Hülsen (10, 20) eine axial belastbare Verschlussfeder (31) mit einem oberen und einem unteren Ende angeordnet ist, wobei sich jedes der Enden an einem Absatz (32) einer anderen Hülse (20, 10) abstützt, sodass die Verschlussfeder (31) in einer der Stellungen gespannt, in der anderen entspannt ist.

4. Sicherheits-Ventilverschluss nach Anspruch 3, **dadurch gekennzeichnet, dass** die Verschlussfeder (31) in der gezogenen Stellung entspannt ist, sodass der Sicherheits-Ventilverschluss (1) in dieser entkoppelten Stellung verbleibt, solange nicht auf den Handgriff (21) gedrückt wird, damit das Ventil (40, 40') nicht versehentlich verstellt werden kann.

5. Sicherheits-Ventilverschluss nach Anspruch 3, **dadurch gekennzeichnet, dass** die Verschlussfeder (31) in der gedrückten Stellung entspannt ist, sodass der Sicherheits-Ventilverschluss (1) in dieser drehgekoppelten Stellung verbleibt, solange nicht am Handgriff (21) gezogen wird, damit das Ventil (40, 40') stets verstellt werden kann.

6. Sicherheits-Ventilverschluss nach Anspruch 2, **dadurch gekennzeichnet, dass** die Sicherung (30) mit einem Gewindestift (33) erreicht wird, der radial in die äussere Hülse (20) eingebracht ist, wobei an der inneren Hülse (10) eine oder zwei passende, umlaufende Nuten (35) angebracht sind, in welche der Gewindestif (33)t in mindestens einer der Stellungen, vorzugsweise in beiden Stellungen, eingreifen kann, um die jeweilige Stellung zu fixieren.

7. Sicherheits-Ventilverschluss nach Anspruch 6, **dadurch gekennzeichnet, dass** der Gewindestift (33) mit einer gefederten Druckkugel (34) ausgestattet ist, um eine Änderung und Einrastung in die eine oder beide Nuten (35) ohne Gebrauch von Werkzeugen zu erreichen.

8. Sicherheits-Ventilverschluss nach einem der Ansprüche 2 bis 7, **dadurch gekennzeichnet, dass** die Sicherung (30) entweder im Bereich radial ausserhalb des Ventilraums (11) angeordnet ist oder radial ausserhalb eines Führungsbolzens (16), der auf dem Deckel (12) der inneren Hülse (10) nach oben ragt.

9. Sicherheits-Ventilverschluss nach einem der vorhergehenden Ansprüche, **dadurch gekennzeichnet, dass** in der mindestens halbseitigen radialen Bohrung (23) ein Bolzenschloss (8) eingesetzt ist, aus dem beim Verschliessen ein Bolzen über die innere Hülse (10) ausgefahren werden kann, welcher ein Drücken der Hülsen zueinander mechanisch verhindert.

10. Sicherheitsventil (40') zur Verwendung mit einem Sicherheits-Ventilverschluss (1) nach einem der vorhergehenden Ansprüche, umfassend ein Ventilgehäuse (41) und einen dieses koaxial durchquerenden und dazu axial beweglich gelagerten Ventilstamm (42), wobei dazwischen eine Faltenbalgdichtung (46) angeordnet und unten am Ventilgehäuse (41) sowie oben am Ventilstamm (42) angeschweisst ist oder umgekehrt, **dadurch gekennzeichnet, dass** ein zusätzliches Dichtungssystem (51) zwischen dem Ventilstamm (42) und dem Ventilgehäuse (41) angeordnet ist, welches mindestens einen ersten O-Ring (52) zwischen dem Ventilstamm (42) und dem Ventilgehäuse (41) umfasst, sodass im Gebrauch bei einem Versagen der Faltenbalgdichtung (46) das zusätzliche Dichtungssystem (51) zusätzlichen Schutz bieten kann.

11. Sicherheitsventil nach Anspruch 10, **dadurch gekennzeichnet, dass** zwischen dem Ventilstamm (42) und dem Ventilgehäuse (41) ein zylindrischer Kolben (53) axial beweglich eingesetzt ist, wobei der erste O-Ring (52) zwischen dem Kolben (53) und dem Ventilgehäuse (41) eingesetzt ist und das Dichtungssystem (51) einen zweiten O-Ring (54) umfasst, der zwischen dem Ventilstamm (42) und dem Kolben (53) eingesetzt ist.

12. Sicherheitsventil nach Anspruch 10 oder 11, **dadurch gekennzeichnet, dass** der Ventilstamm (42) durch eine Ventilfeder (47) federbelastet im Ventilgehäuse (41) gelagert ist, wobei die Ventilfeder (47) nach unten an einem ersten Absatz (48) am Ventilgehäuse (41) und nach oben an einem zweiten Absatz (49) abgestützt ist, der seinerseits in seiner Bewegung nach oben an einer ersten vorzugsweise entnehmbaren Arretierung (50) am Ventilgehäuse (41) begrenzt ist, wobei der zweite Absatz (49) entweder fest mit dem Ventilstamm (42) verbunden ist oder als zylindrischer Kolben (53) beweglich um den Ventilstamm (42) gelagert ist und mit einer zweiten vorzugsweise entnehmbaren Arretierung (50') am Ventilstamm (42) nach oben abgestützt ist.

13. Sicherheits-Ventilverschluss nach einem der Ansprüche 1 bis 9, **gekennzeichnet durch** ein im Ventilraum (11) verschliessbar eingebautes Ventil (40, 40'), vorzugsweise ein Sicherheitsventil (40') nach einem der Ansprüche 10 bis 12.

14. Sicherheits-Ventilverschluss nach Anspruch 13, **dadurch gekennzeichnet, dass** das Ventil (40, 40') ein Gasventil ist, vorzugsweise ein Vakuum oder ein Hochvakuumventil.

15. Sicherheits-Ventilverschluss nach einem der Ansprüche 13 oder 14, vorgesehen für die Verwendung im Hochsicherheitsbereich, wobei die zu verwenden Fluide gefährliche Gefahrenstoffe enthalten können wie beispielsweise biologische, chemische oder radioaktive Gefahrenstoffe.
